# EUROPEAN PATENT APPLICATION

(11) **EP 4 432 765 A1**
(43) Date of publication of application: **18.09.2024**
(21) Application number: 22892097.1
(22) Date of filing: 11.11.2022
(51) Int. Cl.: H04W 74/08

(54) **RANDOM ACCESS METHOD, TERMINAL AND NETWORK SIDE DEVICE**

(30) Priority: 12.11.2021 CN 202111343121
(71) Applicant: VIVO MOBILE COMMUNICATION CO., LTD., Dongguan, Guangdong 523863 (CN)
(72) Inventor: YANG, Kun, Dongguan, Guangdong 523863 (CN); WU, Kai, Dongguan, Guangdong 523863 (CN)
(74) Representative: Murgitroyd & Company
(86) International application number: PCT/CN2022/131384
(87) International publication number: WO 2023/083304

(57) **Abstract**

This application discloses a random access method, a terminal, and a network-side device, and belongs to the technical field of wireless communication. The random access method of an embodiment of this application includes: a terminal performing random access by repeatedly transmitting a first message Msg1.

## Description

### CROSS-REFERENCE TO RELATED APPLICATIONS

This application claims priority to Chinese Patent Application No. 202111343121.2 filed on November 12, 2021, which is incorporated herein by reference in its entirety.

### TECHNICAL FIELD

This application belongs to the technical field of wireless communication, and particularly relates to a random access method, a terminal, and a network-side device.

### BACKGROUND

In a new radio (New Radio, NR) system, two types of random access processes are usually supported, such as a 4-step random access type (4-step random access channel (Random Access Channel, RACH)) for a first message (Msg1) and a 2-step random access type (2-step RACH) for an MsgA. The two types of random access processes both support contention based random access (Contention based RA, CBRA) and contention free random access (Contention free RA, CFRA).

However, for the foregoing process of the 4-step RACH, during the random access process, for terminals located in deep fading zones such as cell edge regions or obstacle blocking zones or the like, the coverage performance of an uplink channel such as the Msg1 is poor compared to that of a downlink channel or an uplink channel in a connectivity state, and therefore it is difficult for the terminals to achieve cell access.

### SUMMARY

Embodiments of this application provide a random access method, a terminal, and a network-side device, such that the problem that it is difficult for terminals to achieve cell access can be solved.

According to a first aspect, a random access method is provided, the method including: a terminal performing random access by repeatedly transmitting a first message (Msg1).

According to a second aspect, a random access method is provided, the method including: a network-side device receiving a first message Msg1, where the Msg1 is repeatedly transmitted by a terminal.

According to a third aspect, a random access apparatus is provided, and applied to a terminal, the apparatus including: a first transmission module, performing random access by repeatedly transmitting a first message Msg1.

According to a fourth aspect, a random access apparatus is provided, and applied to a network-side device, the apparatus including: a second transmission module, configured to receive a first message Msg1, where the Msg1 is repeatedly transmitted by a terminal.

According to a fifth aspect, a terminal is provided, where the terminal includes a processor, a memory, and programs or instructions stored on the memory and executable on the processor, and the programs or instructions, when executed by the processor, implement steps of the method according to the first aspect.

According to a sixth aspect, a terminal is provided, including a processor and a communication interface, where the communication interface is coupled to the processor, and the processor is configured to run programs or instructions to implement steps of the method according to the first aspect.

According to a seventh aspect, a network-side device is provided, where the network-side device includes a processor, a memory, and programs or instructions stored on the memory and executable on the processor, and the programs or instructions, when executed by the processor, implement steps of the method according to the second aspect.

According to an eighth aspect, a network-side device is provided, including a processor and a communication interface, where the communication interface is coupled to the processor, and the processor is configured to run programs or instructions to implement steps of the method according to the second aspect.

According to a ninth aspect, a readable storage medium is provided, where programs or instructions are stored on the readable storage medium, and the programs or instructions, when executed by a processor, implement steps of the method according to the first aspect or implementing steps of the method according to the second aspect.

According to a tenth aspect, a chip is provided, the chip including a processor and a communication interface, where the communication interface is coupled to the processor, and the processor is configured to run programs or instructions to implement steps of the method according to the first aspect or implement steps of the method according to the second aspect.

According to an eleventh aspect, a computer program product/program product is provided, where the computer program product/program product is stored in a non-transient storage medium, and the program/program product is executed by at least one processor to implement steps of the method according to the first aspect or implement steps of the method according to the second aspect.

In the embodiments of this application, the terminal performs random access by repeatedly transmitting the Msg1, such that the coverage performance of the Msg1 can be enhanced, thereby ensuring that the terminal can achieve efficient cell access.

### BRIEF DESCRIPTION OF THE DRAWINGS

FIG. 1 is a schematic structural diagram of a wireless communication system provided by an exemplary embodiment of this application;
FIG. 2a is a first flow chart of a random access method provided by an exemplary embodiment of this application;
FIG. 2b is a schematic diagram of an association relationship between a transmitting beam and an SSB provided by an exemplary embodiment of this application;
FIG. 3 is a second flow chart of a random access method provided by an exemplary embodiment of this application;
FIG. 4 is a third flow chart of a random access method provided by an exemplary embodiment of this application;
FIG. 5 is a fourth flow chart of a random access method provided by an exemplary embodiment of this application;
FIG. 6a is a first schematic structural diagram of a random access apparatus provided by an exemplary embodiment of this application;
FIG. 6b is a second schematic structural diagram of a random access apparatus provided by an exemplary embodiment of this application;
FIG. 7 is a third schematic structural diagram of a random access apparatus provided by an exemplary embodiment of this application;
FIG. 8 is a schematic structural diagram of a terminal provided by an exemplary embodiment of this application; and
FIG. 9 is a schematic structural diagram of a network-side device provided by an exemplary embodiment of this application.

### DETAILED DESCRIPTION

The technical solutions in embodiments of this application are clearly described in the following with reference to the accompanying drawings in the embodiments of this application. Apparently, the described embodiments are merely some rather than all of the embodiments of this application. All other embodiments obtained by persons of ordinary skill in the art based on the embodiments of this application fall within the protection scope of this application.

In the specification and claims of this application, and terms "first", "second" and the like are used to distinguish similar objects, and are not used to describe a specific sequence or precedence order. It is to be understood that terms used in this way are exchangeable in a proper case, so that the embodiments of this application can be implemented in an order different from the order shown or described herein, and the objects distinguished by "first" and "second" are usually of one type, and there is no limit to the number of objects, for example, the first object may be one or more than one. In addition, "and/or" used in the specification and the claims represents at least one of the connected objects, and the character "/" generally indicates an "or" relationship between the objects associated in the context.

It is to be noted that the technologies described in the embodiments of this application are not limited to the long term evolution (Long Term Evolution, LTE)/LTE-advanced (LTE-Advanced, LTE-A) system, and may further be applied to other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" are often used interchangeably in the embodiments of this application, and the technologies described may be used for both the systems and radio technologies mentioned above, as well as for other systems and radio technologies. The following description describes a new radio (New Radio, NR) system for exemplary purposes and uses the term NR for much of the following description, however, these technologies may also be used in applications other than applications of the NR system, such as 6th generation (6th Generation, 6G) communication systems.

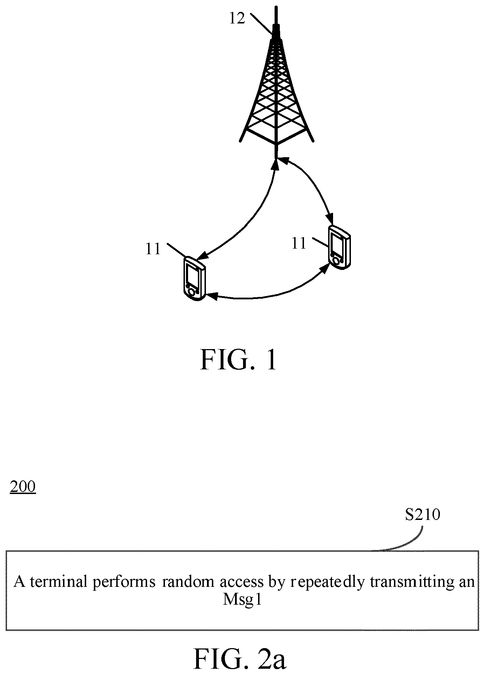

FIG. 1 is a schematic structural diagram of a wireless communication system to which embodiments of this application are applicable. The wireless communication system includes a terminal 11 and a network-side device 12. The terminal 11 may also be called a terminal device or user equipment (User Equipment, UE), the terminal 11 may be a mobile phone, a tablet personal computer (Tablet Personal Computer), a laptop computer (Laptop Computer) or a notebook computer, a personal digital assistant (Personal Digital Assistant, PDA), a handheld computer, a netbook, an ultra-mobile personal computer (ultra-mobile personal computer, UMPC), a mobile Internet device (Mobile Internet Device, MID), a wearable device (Wearable Device), or vehicle user equipment (VUE), pedestrian user equipment (PUE), and other terminal side devices. The wearable device includes: smart watches, wristbands, headphones, glasses, etc. It is to be noted that the specific type of the terminal 11 is not limited in the embodiments of this application. The network-side device 12 may be a base station or a core network, where the base station may be referred to as a node B, an evolved node B, an access point, a base transceiver station (Base Transceiver Station, BTS), a radio base station, a radio transceiver, a basic service set (Basic Service Set, BSS), an extended service set (Extended Service Set, ESS), a node B, an evolved node B (eNB), a household node B, a household evolved node B, a WLAN access point, a WiFi node, a transmitting receiving point (Transmitting Receiving Point, TRP) or some other suitable terms in the field as long as the same technical effect is achieved, the base station is not limited to a specific technical word, it is to be noted that: only a base station in the NR system is used as an example in the embodiments of this application, but the specific type of the base station is not limited.

The technical solutions of the embodiments of this application are described in detail below by some embodiments and the application scenarios thereof in conjunction with the accompanying drawings.

As shown in FIG. 2a, which is a flow chart of a random access method 200 provided by an exemplary embodiment of this application, the method 200 may, but is not limited to, be executed by a terminal, and specifically may be executed by hardware and/or software installed in the terminal. In this embodiment, the method 200 may at least include the following step.

S210: The terminal performs random access by repeatedly transmitting an Msg1.

A random access process mentioned in this application is based on a 4-step RACH of the Msg1, then in this case, this application performs random access by repeatedly transmitting the Msg1, which can enhance the coverage performance of the Msg1, so as to enable terminals located in deep fading zones, such as cell edge regions or obstacle blocking zones, to realize efficient cell access, thereby ensuring the reliability of wireless communication.

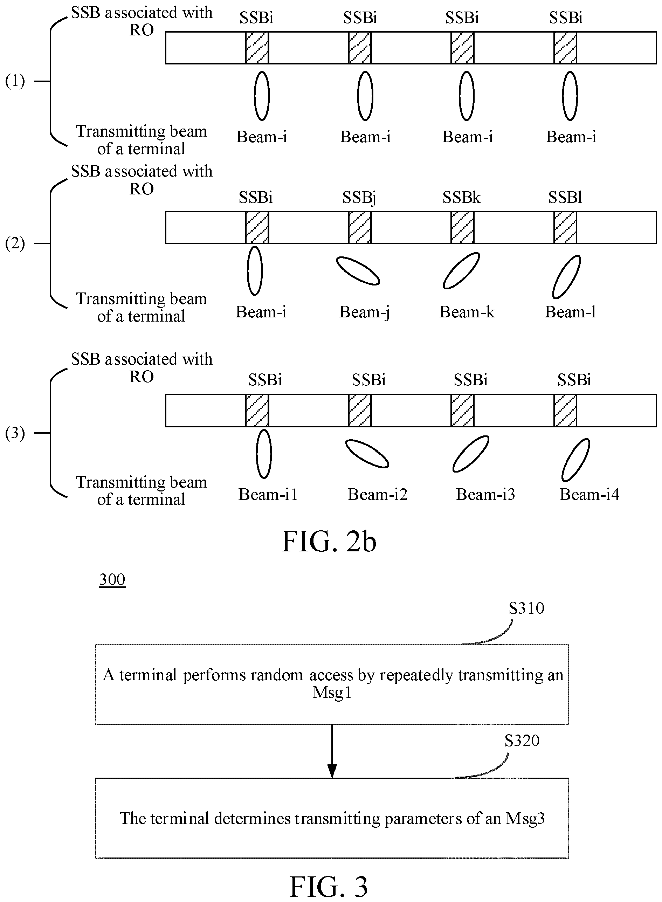

Optionally, the terminal, when repeatedly transmitting the Msg1, may be based on a single beam for repeatedly transmitting the Msg1 (i.e., as shown in FIG. 2b, a plurality of Msg1s are associated with the same synchronization signal and PBCH block (Synchronization Signal and PBCH block, SSB), or random access channel occasion (RO) resources used when transmitting the Msg1 are associated with the same SSB). It is also possible to repeatedly transmitting the Msg1 on the basis of a plurality of beams (i.e., as shown in FIG. 2b, RO resources of the plurality of Msg1s are respectively associated with a plurality of different SSBs, or, RO resources of the plurality of Msg1s are associated with the same SSB, but each Msg1 uses a different transmitting beam), and there is no limitation herein.

Of course, when random access is performed by repeatedly transmitting the Msg1, the subsequent receiving operation of an Msg2/Msg4, and the transmitting operation of an Msg3 may be determined by static configuration or dynamic indication, for example, the terminal may determine, on the basis of the method of static configuration or dynamic indication, an unscrambling manner of the Msg2, and transmitting parameters of the Msg3, where the transmitting parameters may include a number of transmitting times and/or transmitting beams. It is to be understood that the transmitting beam of the terminal may be expressed as a spatial domain transmission filter (spatial domain transmission filter).

In this embodiments, the terminal realizes random access by repeatedly transmitting the Msg1, such that the coverage performance of the Msg1 can be enhanced, thereby ensuring that the terminal can achieve efficient cell access.

As shown in FIG. 3, which is a flow chart of a random access method 300 provided by an exemplary embodiment of this application, the method 300 may, but is not limited to, be executed by a terminal, and specifically may be executed by hardware and/or software installed in the terminal. In this embodiment, the method 300 may at least include the following step.

S310: The terminal performs random access by repeatedly transmitting an Msg1.

It is to be understood that the implementation process of S310 may refer to relevant description in the method embodiment 200 and is not repeated herein to avoid repetition.

It is to be understood that in the case that repeated transmission of the Msg1 is performed for random access, the newly defined form of transmitting the Msg1 may affect subsequent receiving/transmitting operations of an Msg2/3/4 of the random access process. For example, in a case that the Msg1 is repeatedly transmitted, and different RO resources of the Msg1 are associated with different SSBs, the terminal uses a plurality of uplink beams to transmit the Msg1 and the Msg3. Thus, for Msg3 PUSCH transmission, the terminal needs to determine an uplink beam of an Msg3 PUSCH before transmitting.

Thus, optionally, the method further includes:
S320: The terminal determines transmitting parameters of a third message Msg3.

That is, the terminal determines the transmitting parameters of the third message Msg3 in a case that repeated transmission of the Msg1 is performed for random access. Optionally, the transmitting parameters may include a number of transmitting times and/or transmitting beams.

In one possible implementation, the step where the terminal determines the number of transmitting times of the Msg3 may include at least one of the following (11) - (14).

(11) The terminal determines the number of transmitting times of the Msg3 according to an unscrambling result of an uplink grant (UL Grant) included in a monitored second message (Msg2).

It is to be noted that the Msg2 is obtained when the terminal monitors the Msg2 after transmitting the Msg 1.

Furthermore, in this embodiment, the terminal may unscramble the UL Grant in the Msg2 according to a first unscrambling manner to obtain the unscrambling result of the UL Grant included in the Msg2, such as indication information about whether the number of transmitting times and the transmitting beam of the Msg3 are indicated in UL Grant formats or the UL Grant.

Optionally, the first unscrambling manner may include at least one of the following (111) - (113).

(111) A UL Grant unscrambling manner indicated by first system information (System Information, SI). That is, the first unscrambling manner may be acquired by dynamic indication.

(112) A default UL Grant unscrambling manner. That is to say, the first unscrambling manner can be acquired by static configuration/protocol predefinition, i.e., in a scenario where the Msg1 is repeatedly transmitted, the terminal performs unscrambling by default in accordance with a fixed UL grant format.

(113) A UL Grant unscrambling manner indicated by a first field.

The first field may include any one of a field in a sub protocol data unit (sub PDU) (e.g., a reserved field in the sub PDU) included in the Msg2, a field in the UL grant included in the Msg2, and a field in second downlink control information, where the second downlink control information is downlink control information (Downlink Control Information, DCI) 1-0 scrambled by a random access radio network temporary identifier (Random Access Radio Network Temporary Identifier, RA-RNTI).

Fields in the UL grant may include at least one of a channel state information request (Channel State Information request, CSI request) field, a modulation and coding scheme (Modulation and coding scheme, MCS) field (e.g., 1 to 2 bits in a 4bit MCS field), and a transmit power control (Transmit Power Control, TPC) field (e.g., 1 to 2 bits in a 3bit TPC field). In addition, a dedicated TDRA table may be defined by a protocol predefinition or a system message, and the TDRA table contains indication information (a number of repetition times and/or transmitting beams).

Of course, in the case that UL Grant unscrambling manner indication is performed by the aforementioned field, one or more of the aforementioned fields may be configured by protocol conventions or high-level configuration, etc. to perform indication, and the indication may be realized by explicit or implicit methods, which is not limited in this embodiment.

Further, when the terminal uses the UL Grant unscrambling manner given in the foregoing (111) - (113) to unscramble the UL grant in the Msg2. The UL Grant formats corresponding to the different unscrambling manners may include any one of the following first UL grant format, second UL grant format and third UL grant format.

The first UL grant format is included, and the UL grant corresponding to the first UL grant format indicates the number of transmitting times of the Msg3, but is not able to indicate the transmitting beam of the Msg3. Optionally, for the first UL grant format, the terminal may use the UL grant format defined in NR Rel-17 to perform unscrambling.

In one implementation, indication of the number of transmitting times of the Msg3 may be realized by redefining one or more fields (e.g., a PUSCH time resource allocation/TDRA field or an MCS, etc.) in the UL grant.

The second UL grant format is included, and the UL grant corresponding to the second UL grant format is not able to indicate the number of transmitting times and the transmitting beam of the Msg3. The second UL grant format can be understood as the UL grant format defined in NR Rel-15/16.

The third UL grant format is included, and the UL grant corresponding to the third UL grant format indicates the number of transmitting times and the transmitting beam of the Msg3.

In one implementation, for the third UL grant format, the indication of the number of transmitting times and the transmitting beam of the Msg3 may be realized by redefining at least one of one or more fields (e.g., a CSI request field, an MCS field (e.g., 1 to 2 bits in a 4bit MCS field) and a TPC field (e.g., 1 to 2 bits in a 3bit TPC field) in the UL grant. Alternatively, the indication of the number of transmitting times and the transmitting beam of the Msg3 may also be realized by defining a dedicated UL grant field or the like, which is not limited in this embodiment.

Of course, on the basis of the foregoing first UL grant format, the second UL grant format and the third UL grant format, if the unscrambling result on the UL Grant included in the Msg2 by the terminal is that the UL Grant is in the second UL grant format, then the terminal may further, in conjunction with the subsequent (12) or (13) or other protocol predetermination rules and the like, perform the determination of the number of transmitting times of the Msg3.

If the unscrambling result on the UL Grant included in the Msg2 by the terminal is that the UL Grant is in the first UL grant format or the third UL grant format, then the terminal may determine the number of transmitting times of the Msg3 according to the transmitting parameter indicated in the UL Grant.

(12) The terminal defaults the number of transmitting times of the Msg3 to be equal to a number of transmitting times of the Msg1. That is, in a case that the terminal repeatedly transmits the Msg1, the Msg3 is also repeatedly transmitted, and the number of transmitting times of the Msg3 is the same as the number of transmitting times of the Msg1.

(13) The terminal determines the number of transmitting times of the Msg3 according to a value of the RA-RNTI, where the RA-RNTI is used to monitor the Msg2.

In one implementation, if a network-side device (e.g., a base station) successfully detects the Msg1 before the end of repeated transmission of the Msg1, then the terminal may calculate the RA-RNTI in accordance with an Msg1 time-frequency resource parameter corresponding to the successfully detected Msg1.

Of course, if the terminal transmits a plurality of Msg1s, then the base station may calculate a plurality of RA-RNTIs on the basis of Msg1 time-frequency resource parameters corresponding to the plurality of Msg1s. In this case, configuration may be performed by protocol predefinition or a system message. Different RA-RNTIs correspond to different numbers of repetition times of the Msg3, e.g., a first RA-RNTI corresponding to a first Msg1 corresponds to that the Msg3 is transmitted one time. A second RA-RNTI corresponding to a second Msg1 corresponds to that the Msg is repeatedly transmitted twice,...... and so on.

Alternatively, in a case that the terminal uses a plurality of RA-RNTIs to monitor the Msg2, the terminal may determine the number of transmitting times of the Msg3 according to a value of a target RA-RNTI, where the target RA-RNTI is the RA-RNTI successfully monitoring the Msg2 among the plurality of the RA-RNTIs, and the plurality of RA-RNTIs are in one-to-one correspondence with the first message Msg1 repeatedly transmitted. That is, the terminal uses a plurality of RA-RNTIs to monitor the Msg2, and the RA-RNTI used when the Msg2 is monitored successfully determines the number of repetition times of the Msg3.

(14) The terminal determines the number of transmitting times of the Msg3 according to first downlink control information, and the first downlink control information includes DCI 0-0 scrambled by a temporary cell RNTI (TC-RNTI). The first downlink control information may be transmitted to the terminal when the network-side device fails to schedule Msg3 transmission via the Msg2, so as to re-schedule Msg3 retransmission, and indicate retransmitting parameters of the Msg3 such as the number of transmitting times and/or the transmitting beam at the same time.

That is, after initial transmission of the Msg3, the terminal may monitor the DCI 0-0 scrambled by the TC-RNTI to determine the number of transmitting times of retransmission of the Msg3. For example, the number of transmitting times of retransmission of the Msg3 may be determined according to indicative information in the MCS field, a new data indicator (New Data Indicator, NDI) field, an HARQ process number field, etc., in the DCI 0-0.

It is to be noted that when the terminal uses the method of determining the number of transmitting times given in the foregoing (11) - (14), the exact method of determining the number of transmitting times may be realized by protocol conventions, high-level configuration, or network-side device configuration, which is not limited herein.

Further, the step where the terminal determines the transmitting beam of the Msg3 may include at least one of the following (21) - (22).

(21) The terminal determines, according to a first reference beam, the transmitting beam of the Msg3 during initial transmission, and the first reference beam is determined by the terminal according to the unscrambling result of the UL Grant included in the monitored Msg2, the value of the RA-RNTI, or a protocol default rule.

The implementation process of the first unscrambling manner used when the terminal unscrambles the UL Grant included in the monitored Msg2 can refer to the relevant description in the foregoing (11), and will not be repeated herein.

Of course, unlike the determination of the number of transmitting times as described previously: if the unscrambling result on the UL Grant included in the Msg2 by the terminal is that the UL Grant is in the first UL grant format or the second UL grant format, then the terminal may further, according to the value of the RA-RNTI, a default protocol rule and the like, perform the determination of the transmitting beam of the Msg3.

If the unscrambling result on the UL Grant included in the Msg2 by the terminal is that the UL Grant format is the third UL grant format, then the terminal may determine, according to the transmitting beam indicated in the UL Grant, the transmitting beam of the Msg3 during initial transmission.

In addition, the process of the terminal determining the transmitting beam of the Msg3 during initial transmission according to the value of the RA-RNTI may include: The terminal first determines, according to the value of the RA-RNTI, a corresponding Msg1, or an SSB associated with the corresponding Msg1, and then uses the transmitting beam of the Msg1 or a receiving beam of the SSB as the transmitting beam of the Msg3.

The terminal determining the first reference beam according to the protocol rule may include: the first reference beam is defaulted to be a receiving beam of the Msg2, the transmitting beam of the Msg1, the receiving beam of the SSB, etc., and the specific type of beam to be used as the first reference beam is configured by protocol predefinition or a system message, which is not limited herein.

On the basis of the foregoing description, as a possible implementation, the first reference beam given in this embodiment may include at least one of the following (211) - (213).

(211) A transmitting beam of the Msg1. For example, the transmitting beam of the Msg3 during initial transmission may be the transmitting beam of the Msg1, which is not limited in this embodiment.

(212) A receiving beam of the Msg2. For example, the transmitting beam of the Msg3 during initial transmission may be the receiving beam of the Msg2, which is not limited in this embodiment.

(213) A receiving beam of a synchronization signal and PBCH block (Synchronization Signal and PBCH block, SSB), where the SSB is associated with the Msg1. For example, the transmitting beam of the Msg3 during initial transmission may be the receiving beam of the SSB, which is not limited in this embodiment.

Based on this, as an implementation, in a case that the UL Grant format corresponding to the UL Grant unscrambling manner is a first UL grant format or a second UL grant format, the step where the terminal determines, according to the first reference beam, the transmitting beam of the Msg3 during initial transmission may include any one of the following (214) - (215).

(214) The terminal determines the transmitting beam of the Msg3 according to the receiving beam of the Msg2, where the Msg3 is transmitted one time or the Msg3 is repeatedly transmitted multiple times, but uses a single beam.

That is, if the Msg2 indicates that the Msg3 is transmitted one time, or the terminal determines according to protocol conventions or first system message configuration (e.g., the cell does not support repeated transmission of the Msg3) that the Msg3 performs repeated transmissions, but uses a single beam, then the terminal may determine the transmitting beam of the Msg3 in accordance with the receiving beam for receiving the Msg2. That is, the receiving beam of the Msg2 has the same spatial domain filter (spatial domain filter) as the transmitting beam of the Msg3.

(215) The terminal determines the first reference beam according to the value of the RA-RNTI, and determines the transmitting beam of the Msg3 according to the first reference beam, where the first reference beam includes the receiving beam of the Msg2 or the receiving beam of the SSB.

That is, if the terminal determines, according to the value of the RA-RNTI, a corresponding Msg1, or an SSB associated with the corresponding Msg1, and uses the transmitting beam of the Msg1 or the receiving beam of the SSB as the transmitting beam of the Msg3. For example, if the terminal transmits N Msg1s and the N Msg1s are associated with N different SSBs, then the terminal receives the Msg2 and determines, according to the value of the RA-RNTI, the corresponding Msg1 from the N Msg1s or one of the reference beams (the transmitting beam of the Msg1 or the receiving beam of the SSB) from the N associated SSBs as a beam associated with an Msg3 PUSCH transmitting beam.

(22) The terminal determines, according to a second reference beam, the transmitting beam of the Msg3 during retransmission, the second reference beam is determined by the terminal according to the first downlink control information or a protocol default rule, and the first downlink control information includes DCI 0-0 scrambled by a TC-RNTI.

When the terminal determines the second reference beam according to the first downlink control information, the first downlink control information may be transmitted to the terminal when the network-side device fails to schedule Msg3 initial transmission via the Msg2, so as to schedule Msg3 retransmission, and indicate retransmitting parameters of the Msg3 such as the number of transmitting times and/or the transmitting beam at the same time.

That is, after initial transmission of the Msg3, the terminal monitors the DCI 0-0 scrambled by the TC-RNTI to determine the transmitting beam of the Msg3 during retransmission. For example, the terminal may determine the transmitting beam of the Msg3 during retransmission by fields in the DCI 0-0, such as a 5bit MCS field, a 1bit NDI field, and a 4bit hybrid automatic repeat request process number (Hybrid automatic repeat request process number, HARQ process number) field, or a part or combination of the above fields may be used to indicate a transmitting beam.

Alternatively, in a case that the terminal determines the transmitting beam of the Msg3 during retransmission by the first control information, the transmitting beam same as the transmitting beam of the Msg3 during initial transmission may also be maintained to transmit the Msg3 again. However, the number of repetition times of the Msg3 for retransmission may be additionally indicated in the DCI 0-0.

Alternatively, the terminal changes the transmitting beam and the number of retransmission times of the Msg3 for retransmission. The indication method that the number of retransmission times uses the number of repetition times of the Rel-17 Msg3 retransmission is indicated, and the transmitting beam of the Msg3 for retransmission is indicated by one or a combination of more of the fields such as a 5bit MCS field, a 1bit NDI field, a 4bit HARQ process number field, and so on.

Of course, as an implementation, the second reference beam includes at least one of the following (221) - (224).

(221) A transmitting beam of the Msg1. For example, the transmitting beam of the Msg3 during retransmission may be the transmitting beam of the Msg1, which is not limited in this embodiment.

(222) A receiving beam of the Msg2 or the first control information. For example, the transmitting beam of the Msg3 during retransmission may be the receiving beam of the Msg2 or the first control information, which is not limited in this embodiment.

(223) A receiving beam of the SSB, where the SSB is associated with the Msg1. For example, the transmitting beam of the Msg3 during retransmission may be the receiving beam of the SSB, which is not limited in this embodiment.

(224) A transmitting beam of the Msg3 during initial transmission. The transmitting beam of the Msg3 during initial transmission may be determined by a determination method given in the forgoing (21), which is not repeated herein.

As an implementation, in a case that the UL Grant format corresponding to the UL Grant unscrambling manner is a first UL grant format or a second UL grant format, the step where the terminal determines the transmitting beam of the Msg3 may further include: the terminal determines, according to a transmitting beam pattern (pattern), a transmitting beam used when the Msg3 is repeatedly transmitted, where the transmitting beam pattern includes L transmitting beams, and L is an integer greater than 1.

That is, if the Msg2 indicates repeated transmission of the Msg3 and a plurality of transmitting beams are used for repeatedly transmitting the Msg3, the terminal may first determine the order of the plurality of transmitting beams during repeatedly transmitting the Msg3 before transmitting the Msg3. The transmitting beam pattern may be a fixed pattern and corresponds to the order of the transmitting beams of the Msg1 one to one, or several candidate transmitting beam patterns may be configured by a system message.

Optionally, the transmitting beam pattern is a sequence including L transmitting beams, and the number L of the transmitting beams included therein may be equal to the number of the transmitting beams for repeatedly transmitting the Msg1, i.e., each transmitting beam in the transmitting beam pattern corresponds to the transmitting beam of one Msg1 or the receiving beam of the SSB. Further, the order of the transmitting beams included in the transmitting beam pattern is the same as the order of the transmitting beams for repeatedly transmitting the Msg1.

In this embodiment, the transmitting beam pattern may be realized by protocol conventions or high-level configuration or network-side configuration (e.g., via a system message), which is not limited herein.

On the basis of this, in one implementation, in a case that the Msg3 is repeatedly transmitted, the transmitting beam of the first Msg3 may be first determined, and then the transmitting beam of each Msg3 PUSCH is determined in a cyclic manner according to the order of the beams in the transmitting beam pattern. In this case, the step where the terminal determines, according to the transmitting beam pattern, the transmitting beam used when the Msg3 is repeatedly transmitted may include any one of the following (31) - (33).

(31) In a case that L is greater than M, the terminal starts to determine M transmitting beams when the Msg3 is repeatedly transmitted from a first beam in the transmitting beam pattern, and the first beam and the position of the first beam in the transmitting beam pattern are determined according to the receiving beam of the Msg2 or the value of the RA-RNTI,
where M is the number of transmitting times of the Msg3, and L and M are both integers greater than or equal to 1.

Exemplarily, if the length of the transmitting beam pattern is L, the number of transmitting times of the Msg3 is M, L>M, and then the terminal starts to determine M transmitting beams of the Msg3 from a first beam of the transmitting beam pattern.

Alternatively, if the length of the transmitting beam pattern is L, the number of transmitting times of the Msg3 is M, L>M, the starting position of the transmitting beam of the Msg3 during first-time transmission at the transmitting beam pattern may be determined in accordance with a protocol definition rule (being the same as the receiving beam of the Msg2 or in accordance with an indication of the RA-RNTI), and then on the basis of the starting position of the transmitting beam of the Msg3 during the first-time transmission at the transmitting beam pattern, transmitting beams of M-1 Msg3s for subsequent retransmission are determined.

(32) In a case that L is equal to M, the terminal starts to determine transmitting beams of M Msg3s from a first transmitting beam in the transmitting beam pattern, where the first transmitting beam is a starting transmitting beam when the M Msg3s are repeatedly transmitted,
where M is the number of transmitting times of the Msg3, and L and M are both integers greater than or equal to 1.

Optionally, the starting transmitting beam when the Msg3 is repeatedly transmitted is determined according to the receiving beam of the Msg2 or the value of the RA-RLTI.

Exemplarily, if the length of the transmitting beam pattern is L, the number of transmitting times of the Msg3 is M, L=M, and transmitting beams of M Msg3s are determined according to the transmitting beam pattern. The starting transmitting beam may be the first beam in the transmitting beam pattern or a beam determined in accordance with the protocol definition rule (being the same as the receiving beam of the Msg2 or in accordance with an indication of the RA-RNTI).

(33) In a case that L is less than M, M transmitting beams when the Msg3 is repeatedly transmitted are determined from the transmitting beam pattern according to a cyclic manner, where M is the number of transmitting times of the Msg3, and L and M are both integers greater than or equal to 1.

Exemplarily, if the length of the transmitting beam pattern is L, the number of transmitting times of the Msg3 is M, L<M, the transmitting beam of the Msg3 may be determined in a cyclic manner, i.e., a next transmitting beam after the last transmitting beam of the transmitting beam pattern is the first transmitting beam of the transmitting beam pattern.

Optionally, in addition to the preceding method, the same transmitting beam, such as the initial transmitting beam, may also be used for the M Msg3s continuously transmitted a plurality of times.

In one implementation, in a case that the terminal determines, on the basis of the transmitting beam pattern, obtaining the transmitting beam when the Msg3 is repeatedly transmitted, the order of the transmitting beam when the Msg3 is repeatedly transmitted may further be determined according to the order of beams in the transmitting beam pattern. That is, the order of the transmitting beams when the Msg3 is repeatedly transmitted is determined in accordance with the order of beams in the transmitting beam pattern.

For example, assuming that the repeatedly transmitted Msg1 is associated with a single SSB, then after the terminal repeatedly transmits the Msg1, only the number of transmitting times of the Msg3 needs to determined, and the transmitting beam of an Msg3 PUSCH does not need to determined, where the method for the terminal to determine the number of transmitting times of the Msg3 can refer to the relevant description on determining the number of transmitting times as described in the preceding S410, and will not be repeated herein to avoid repetition.

In this embodiment, when the terminal repeatedly transmits the Msg1 to perform random access, the unscrambling manner for unscrambling the UL grant in the Msg2 and the transmitting parameter of the Msg3 may be determined by protocol conventions or dynamic indication or the like, whereby not only can it enhance the coverage performance of uplink channels such as the Msg1 and the Msg3, and but also ensure that the UL grant and DCI 0-0 overhead remain unchanged, thereby ensuring that the transmitting parameter of the Msg3 is not ambiguous on both sides of the base station and the terminal, which in turn ensures the reliability of the random access process.

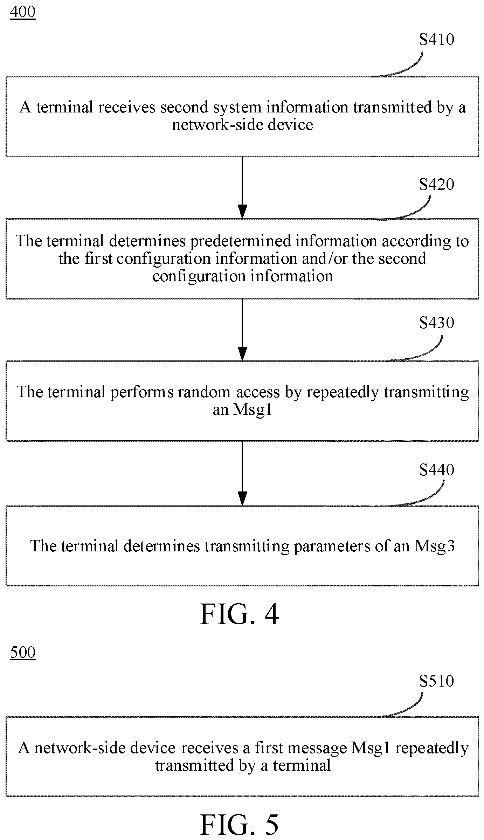

As shown in FIG. 4, which is a flow chart of a random access method 400 provided by an exemplary embodiment of this application, the method 400 may, but is not limited to, be executed by a terminal, and specifically may be executed by hardware and/or software installed in the terminal. In this embodiment, the method 400 may at least include the following step.

S410: The terminal receives second system information transmitted by a network-side device.

The second system information (System Information, SI) may be the same as or different from the aforementioned first system message, without limitation herein.

In this embodiment, the second system information may include at least first configuration information and second configuration information, where the first configuration information is used for repeatedly transmitting the Msg1, e.g., indicating relevant information when the Msg1 is repeatedly transmitted, and the second configuration information is used for transmitting the Msg3, e.g., indicating relevant information when the Msg1 is repeatedly transmitted.

In one implementation, the first configuration information may include at least one of the following (41) - (44).

(41) Whether a transmitting beam corresponding to the Msg1 is a single beam or multiple beams. That is, the terminal may perform repeated transmission of the Msg1 on the basis of a single transmitting beam or perform repeated transmission of the Msg1 on the basis of multiple transmitting beams.

(42) Whether the Msg1 is associated with a single SSB or associated with a plurality of SSBs. That is, whether the terminal is associated with a single SSB or associated with a plurality of SSBs when performing repeated transmission of the Msg1.

(43) Whether a first cell supports repeated transmission of the Msg3, where the first cell is a serving cell of the terminal.

(44) The unscrambling manner of the UL Grant.

For example, the second system message may indicate whether the terminal uses a first UL grant format or a second UL grant format or a third UL grant format to unscramble the UL grant in an Msg2.

In addition, the second system message may also indicate whether to perform repeated transmission of the Msg1, and indicate a set of candidate number of times for the number of transmitting times of the Msg3, etc., where the set of candidate number of times may be different from a set of candidate number of times for repeated transmission of the Msg3 as defined in Rel-17.

The second configuration information includes at least one of the following (51) - (52).

(51) Whether a transmitting beam corresponding to the Msg3 is a single beam or multiple beams.

(52) A transmitting beam pattern corresponding to the Msg3.

It is to be noted that, in this embodiment, in addition to indicating the aforementioned first configuration information and second configuration information via the second system information, as a possible implementation, the first configuration information and/or the second configuration information may also be realized via protocol conventions or terminal default, etc.

For example, assuming that the first configuration information does not contain the information about whether the first cell supports repeated transmission of the Msg3, then the terminal may determine whether the first cell supports repeated transmission of the Msg3 by default or according to protocol conventions.

S420: The terminal determines predetermined information according to the first configuration information and/or the second configuration information.

The predetermined information includes at least one of the following (61) - (63).

(61) Whether the first cell supports repeated transmission of the Msg1, where the first cell is a serving cell of the terminal.

In one implementation, in a case that the terminal determines that the first cell supports repeated transmission of an Msg1, random access may be performed on the basis of a method for repeatedly transmitting the Msg1.

(62) Whether the first cell supports repeated transmission of an Msg3.

(63) Relevant parameters used when the Msg3 is repeatedly transmitted. In an implementation, the relevant parameters used when the Msg3 is repeatedly transmitted include at least one of the following (631) - (635).

(631) A first set, where the first set includes at least one Msg1 time-frequency resource set.

(632) A second set, where the second set includes at least one Msg1 preamble.

(633) A third set, where the third set includes at least one number of repeated transmitting times of the Msg1.

(634) A fourth set, where the fourth set includes at least one number of repeated transmitting times of the Msg3.

(635) A transmit power ramping (power ramping) value.

S430: The terminal performs random access by repeatedly transmitting an Msg1.

S440: The terminal determines transmitting parameters of the Msg3,
where the transmitting parameters include a number of transmitting times and/or transmitting beams.

It is to be understood that the implementation processes of S430 and S440 may refer to relevant description in the method embodiment 200 and/or 300, achieve same or corresponding technical effects, and are not repeated herein to avoid repetition.

As shown in FIG. 5, which is a flow chart of a random access method 500 provided by an exemplary embodiment of this application, the method 500 may, but is not limited to, be executed by a network-side device, and specifically may be executed by hardware and/or software installed in the network-side device. In this embodiment, the method 500 may at least include the following step.

S510: The network-side device receives a first message Msg1,
where the Msg1 is repeatedly transmitted by a terminal.

In one implementation, after the step where the network-side device receives the first message Msg1, the method further includes: the network-side device transmits a second message Msg2 to the terminal. The Msg2 is related to the determination of the transmitting parameters of a third message Msg3, for example, the transmitting parameters of the Msg3, an unscrambling manner of a UL grant in the Msg2, a value of an RA-RNTI, etc. may be indicated in the Msg2, so that the terminal can determine the transmitting parameter of the Msg3 according to one or more of the transmitting parameters of the Msg3, the unscrambling manner of the UL grant in the Msg2, the value of the RA-RNTI, etc. which may be indicated in the Msg2, and the transmitting parameters include a number of transmitting times and/or transmitting beams.

In one implementation, the Msg2 includes a first field for indicating the unscrambling manner of the UL Grant, where the first field includes a field in a sub protocol data unit (sub PDU) included in the Msg2, and a field in the UL grant included in the Msg2.

In one implementation, the field in the UL grant includes at least one of a channel state information request (CSI request) field, a modulation and coding scheme (MCS) field, and a transmit power control (TPC) field.

In one implementation, after the step of transmitting the second message Msg2 to the terminal, the method further includes: in a case that the network-side device receives the Msg3 initially transmitted by the terminal, first downlink control information is transmitted to the terminal, where the first downlink control information includes DCI 0-0 scrambled by a TC-RNTI, and the first downlink control information is related to transmitting parameters of the Msg3 during retransmission.

In one implementation, before the step where the network-side device receives the first message Msg1 repeatedly transmitted by the terminal, the method further includes: the network-side device transmits second system information to the terminal, where the second system information includes first configuration information and second configuration information, the first configuration information is used for repeatedly transmitting the Msg1, and the second configuration information is used for transmitting the Msg3.

In one implementation, the first configuration information includes at least one of the following: whether a transmitting beam corresponding to the Msg1 is a single beam or multiple beams; whether the Msg1 is associated with a single SSB or associated with a plurality of SSBs; whether a first cell supports repeated transmission of the Msg3, where the first cell is a serving cell of the terminal; and the unscrambling manner of the UL Grant.

In one implementation, the second configuration information includes at least one of the following: whether a transmitting beam corresponding to the Msg3 is a single beam or multiple beams; and a first transmitting beam pattern corresponding to the Msg3.

It is to be understood that the implementation processes of the foregoing implementations given in this method embodiment 500 can refer to relevant description in the method embodiments 200-400, achieve same or corresponding technical effects, and are not repeated herein to avoid repetition.

It is to be noted that in the random access methods 200-500 provided by the embodiment of this application, an execution body may be a random access apparatus, or a control module in the random access apparatus for executing the random access method. In the embodiment of this application, a random access apparatus executing the random access method is used as an example to illustrate the random access apparatus provided by the embodiment of this application.

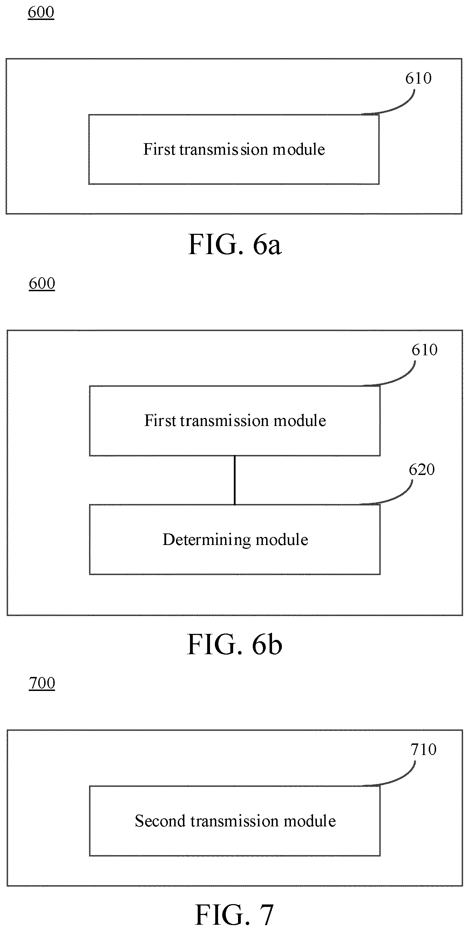

As shown in FIG. 6a, which is a schematic structural diagram of a random access apparatus 600 provided by an exemplary embodiment of this application. The apparatus 600 includes a first transmission module, configured to perform random access by repeatedly transmitting a first message Msg1.

Optionally, the apparatus 600 further includes a configuration module, configured to configure relevant parameters used when the Msg1 is repeatedly transmitted.

Optionally, as shown in FIG. 6b, the apparatus 600 further includes a determining module 620, configured to determine transmitting parameters of a third message Msg3, where the transmitting parameters include a number of transmitting times and/or transmitting beams.

Optionally, the step where the determining module 620 determines the number of transmitting times of the Msg3, include at least one of the following: the number of transmitting times of the Msg3 is determined according to an unscrambling result of an uplink grant (UL Grant) included in a monitored second message Msg2; the number of transmitting times of the Msg3 is defaulted to be equal to a number of transmitting times of the Msg1; the number of transmitting times of the Msg3 is determined according to a value of a random access radio network temporary identifier (RA-RNTI), where the RA-RNTI is used to monitor the Msg2; and the number of transmitting times of the Msg3 is determined according to first downlink control information, where the first downlink control information includes DCI 0-0 scrambled by a TC-RNTI.

Optionally, the step where the determining module 620 determines the number of transmitting times of the Msg3 according to the value of the RA-RNTI, includes: in a case that a plurality of RA-RNTIs are used to monitor the Msg2, the number of transmitting times of the Msg3 is determined according to a value of a target RA-RNTI, where the target RA-RNTI is the RA-RNTI successfully monitoring the Msg2 among the plurality of the RA-RNTIs, and the plurality of RA-RNTIs are in one-to-one correspondence with the first message Msg1 repeatedly transmitted.

Optionally, the step where the determining module 620 determines the transmitting beam of the Msg3, includes at least one of the following: according to a first reference beam, the transmitting beam of the Msg3 during initial transmission is determined, where the first reference beam is determined according to an unscrambling result of a UL Grant included in the monitored Msg2, the value of the RA-RNTI, or a protocol default rule; and according to a second reference beam, the transmitting beam of the Msg3 during retransmission is determined, where the second reference beam is determined according to first downlink control information or a protocol default rule, and the first downlink control information includes DCI 0-0 scrambled by a TC-RNTI.

Optionally, the first reference beam includes at least one of the following: a transmitting beam of the Msg1; a receiving beam of the Msg2; and a receiving beam of a synchronization signal and PBCH block (SSB), where the SSB is associated with the Msg1.

Optionally, the second reference beam includes at least one of the following: a transmitting beam of the Msg1;
a receiving beam of the Msg2; a receiving beam of a synchronization signal and PBCH block (SSB), where the SSB is associated with the Msg1; and the transmitting beam of the Msg3 during initial transmission.

Optionally, the unscrambling result of the UL Grant included in the Msg2 is obtained when the terminal unscrambles the UL Grant in the Msg2 according to a first unscrambling manner, where the first unscrambling manner includes at least one of the following: a UL Grant unscrambling manner indicated by first system information; a default UL Grant unscrambling manner; and a UL Grant unscrambling manner indicated by a first field, where the first field includes any one of a field in a sub protocol data unit (sub PDU) included in the Msg2, a field in the UL grant included in the Msg2, and a field in second downlink control information, and the second downlink control information is DCI 1-0 scrambled by the RA-RNTI.

Optionally, the field in the UL grant includes at least one of a channel state information request (CSI request) field, a modulation and coding scheme (MCS) field, and a transmit power control (TPC) field.

Optionally, UL Grant formats corresponding to the UL Grant unscrambling manner include any one of the following: a first UL grant format, where a UL grant corresponding to the first UL grant format indicates the number of transmitting times of the Msg3, but is not able to indicate the transmitting beam of the Msg3; a second UL grant format, where a UL grant corresponding to the second UL grant format is not able to indicate the number of transmitting times and the transmitting beam of the Msg3; and a third UL grant format, where a UL grant corresponding to the third UL grant format indicates the number of transmitting times and the transmitting beam of the Msg3.

Optionally, in a case that the UL Grant format corresponding to the UL Grant unscrambling manner is the first UL grant format or the second UL grant format, the step where the determining module 620 determines, according to the first reference beam, the transmitting beam of the Msg3 during initial transmission includes any one of the following: the transmitting beam of the Msg3 is determined according to the receiving beam of the Msg2; and the first reference beam is determined according to the value of the RA-RNTI, and the transmitting beam of the Msg3 is determined according to the first reference beam, where the first reference beam includes the receiving beam of the Msg2 or the receiving beam of the SSB. The Msg3 is transmitted one time or the Msg3 is repeatedly transmitted multiple times, but uses a single beam.

Optionally, in a case that the UL Grant format corresponding to the UL Grant unscrambling manner is the first UL grant format or the second UL grant format, the step where the determining module 620 determines the transmitting beam of the Msg3 further includes: the determining module 620 determines, according to a transmitting beam pattern, a transmitting beam used when the Msg3 is repeatedly transmitted, where the transmitting beam pattern includes L transmitting beams, and L is an integer greater than 1.

Optionally, the order of the transmitting beams included in the transmitting beam pattern is the same as the order of the transmitting beams for repeatedly transmitting the Msg1.

Optionally, the step where the determining module 620 determines, according to the transmitting beam pattern, the transmitting beam used when the Msg3 is repeatedly transmitted includes any one of the following: in a case that L is greater than M, the determining module 620 starts to determine M transmitting beams when the Msg3 is repeatedly transmitted from a first beam in the transmitting beam pattern, and the first beam and the position of the first beam in the transmitting beam pattern are determined according to the receiving beam of the Msg2 or the value of the RA-RNTI; in a case that L is equal to M, the determining module 620 starts to determine transmitting beams of M Msg3s from a first transmitting beam in the transmitting beam pattern, where the first transmitting beam is a starting transmitting beam when the M Msg3s are repeatedly transmitted; and in a case that L is less than M, M transmitting beams when the Msg3 is repeatedly transmitted are determined from the transmitting beam pattern according to a cyclic manner, where M is the number of transmitting times of the Msg3, and L and M are both integers greater than or equal to 1.

Optionally, the starting transmitting beam when the Msg3 is repeatedly transmitted is determined according to the receiving beam of the Msg2 or the value of the RA-RNTI.

Optionally, the order of the transmitting beams when the Msg3 is repeatedly transmitted is determined in accordance with the order of beams in the transmitting beam pattern.

Optionally, the apparatus 600 further includes: a first transmission module 610, configured to receive second system information transmitted by the network-side device in a case that random access is performed by repeatedly transmitting the first message Msg1, where the second system information includes first configuration information and second configuration information, the first configuration information is used for repeatedly transmitting the Msg1, and the second configuration information is used for transmitting the Msg3.

Optionally, the first configuration information includes at least one of the following: whether a transmitting beam corresponding to the Msg1 is a single beam or multiple beams; whether the Msg1 is associated with a single SSB or associated with a plurality of SSBs; whether a first cell supports repeated transmission of the Msg3, where the first cell is a serving cell of the terminal; and the unscrambling manner of the UL Grant.

Optionally, the second configuration information includes at least one of the following: whether a transmitting beam corresponding to the Msg3 is a single beam or multiple beams; and a first transmitting beam pattern corresponding to the Msg3.

Optionally, the determining module 620 is further configured to determine, according to the first configuration information and/or the second configuration information, at least one of the following: whether a first cell supports repeated transmission of the Msg1; whether a first cell supports repeated transmission of the Msg3; and relevant parameters used when the Msg3 is repeatedly transmitted, where the first cell is a serving cell of the terminal.

Optionally, the relevant parameters used when the Msg3 is repeatedly transmitted include at least one of the following: a first set, where the first set includes at least one Msg1 time-frequency resource set; a second set, where the second set includes at least one Msg1 preamble; a third set, where the third set includes at least one number of repeated transmitting times of the Msg1; a fourth set, where the fourth set includes at least one number of repeated transmitting times of the Msg3; and a transmit power ramping value.

The random access apparatus 600 in the embodiment of this application may be an apparatus, an apparatus or electronic device with an operating system, or a component in a terminal, an integrated circuit or a chip. The apparatus or electronic device may be a mobile terminal or may be a non-mobile terminal. Exemplarily, the mobile terminal may include, but is not limited to the type of the terminal 11 illustrated above; the non-mobile terminal can be a server, a network attached storage (Network Attached Storage, NAS), a personal computer (personal computer, PC), a television (television, TV), an automatic teller machine, or a self-service machine, which is not specifically limited in the embodiment of this application.

The random access apparatus 600 provided by the embodiment of this application can implement various processes implemented by the method embodiments of FIG. 2a to FIG. 4 and achieve the same technical effect, which will not be described in detail to avoid repetition.

As shown in FIG. 7, which is a schematic structural diagram of a random access apparatus 700 provided by an exemplary embodiment of this application, the apparatus 700 includes: a second transmission module 710, configured to receive a first message Msg1, where the Msg1 is repeatedly transmitted by a terminal.

The second transmission module 710 is further configured to transmit a second message Msg2 to the terminal, where the Msg2 is related to the determination of transmitting parameters of a third message Msg3, and the transmitting parameters include a number of transmitting times and/or transmitting beams.

Optionally, the Msg2 includes a first field for indicating an unscrambling manner of a UL Grant, where the first field includes a field in a sub protocol data unit (sub PDU) included in the Msg2, and a field in the UL grant included in the Msg2.

Optionally, the field in the UL grant includes at least one of a channel state information request (CSI request) field, a modulation and coding scheme (MCS) field, and a transmit power control (TPC) field.

Optionally, the second transmission module 710 is further configured to transmit, in a case that the Msg3 initially transmitted by the terminal is received, first downlink control information to the terminal, where the first downlink control information includes DCI 0-0 scrambled by a TC-RNTI, and the first downlink control information is related to transmitting parameters of the Msg3 during retransmission.

Optionally, the second transmission module 710 is further configured to transmit second system information to the terminal, where the second system information includes first configuration information and second configuration information, the first configuration information is used for repeatedly transmitting the Msg1, and the second configuration information is used for transmitting the Msg3.

Optionally, the first configuration information includes at least one of the following: whether a transmitting beam corresponding to the Msg1 is a single beam or multiple beams; whether the Msg1 is associated with a single SSB or associated with a plurality of SSBs; whether a first cell supports repeated transmission of the Msg3, where the first cell is a serving cell of the terminal; and the unscrambling manner of the UL Grant.

Optionally, the second configuration information includes at least one of the following: whether a transmitting beam corresponding to the Msg3 is a single beam or multiple beams; and a first transmitting beam pattern corresponding to the Msg3.

The random access apparatus 700 in the embodiment of this application may be an apparatus, an apparatus or network-side device with an operating system, or a component in the network-side device, an integrated circuit or a chip. The network-side device may include, but is not limited to, the type of the network-side device 12 enumerated above, which is not specifically limited in the embodiment of this application.

The random access apparatus 700 provided by the embodiment of this application can implement various processes implemented by the method embodiment of FIG. 5 and achieve the same technical effect, which will not be described in detail to avoid repetition.

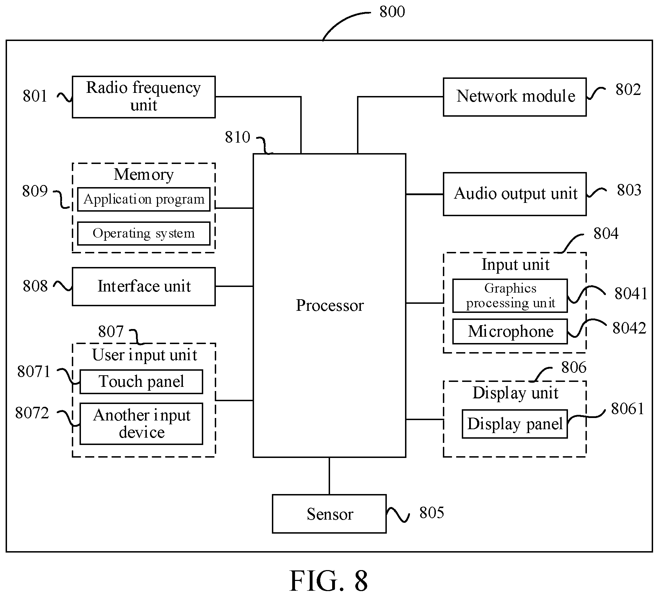

An embodiment of this application further provides a terminal, including a processor and a communication interface, where the communication interface is coupled to the processor, and the processor is configured to run programs or instructions to implement steps of the methods in the method embodiments 200-400. The terminal embodiment corresponds to the above terminal side method embodiment, each implementation process and implementation of the above method embodiment can be applied in the terminal embodiment, and the same technical effect can be achieved. Specifically, FIG. 8 is a schematic structural diagram of a hardware structure of a terminal implementing the embodiments of this application.

The terminal 800 includes, but is not limited to, at least part of components such as a radio frequency unit 801, a network module 802, an audio output unit 803, an input unit 804, a sensor 805, a display unit 806, a user input unit 807, an interface unit 808, a memory 809, and a processor 810.

A person skilled in the art may understand that the terminal 800 may further include a power supply (such as a battery) for supplying power to the various components, and the power supply may be logically connected to the processor 810 by a power management system, thereby implementing functions such as charging, discharging, and power consumption management by the power management system. The terminal structure shown in FIG. 8 does not constitute a limitation on the terminal, and the terminal may include components more or fewer than components shown in the figure, or combine some components, or have different component arrangements, which will not be described in detail here.

It is to be understood that, in the embodiment of this application, the input unit 804 may include a graphics processing unit (Graphics Processing Unit, GPU) 1041 and a microphone 8042. The graphics processing unit 8041 performs processing on image data of a static picture or a video that is obtained by an image capture device (for example, a camera) in a video capture mode or an image capture mode. The display unit 806 may include a display panel 8061. The display panel 8061 may be configured in the form of a liquid crystal display (LCD), an organic light-emitting diode (OLED), or the like. The user input unit 807 includes a touch panel 8071 and another input device 8072. The touch panel 8071 is also called a touchscreen. The touch panel 8071 may include two parts: a touch detection apparatus and a touch controller. The another input device 8072 may include, but is not limited to, a physical keyboard, a functional key (such as a volume control key or a switch key), a track ball, a mouse, and a joystick, which will not be described in detail here.

In the embodiment of this application, after downlink data from the network-side device is received by the radio frequency unit 801, the downlink data is processed by the processor 810. In addition, uplink data is transmitted to the network-side device. Generally, the radio frequency unit 801 includes, but is not limited to, an antenna, at least one amplifier, a transceiver, a coupler, a low noise amplifier, a duplexer, and the like.

The memory 809 may be configured to store software programs or instructions and various data. The memory 809 may mainly include a program and instruction storage area and a data storage area, where the program or instruction storage area may store an operating system, an application program or instruction required by at least one function (for example, a sound playback function and an image playback function), and the like. In addition, the memory 809 may include a high-speed random access memory, and may also include a non-volatile memory, where the non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM) or a flash memory, for example, at least one magnetic disk storage device, a flash memory device or another non-volatile solid-state storage device.

The processor 810 may include one or more processing units. Optionally, the processor 810 may integrate an application processor and a modem processor, where the application processor mainly processes an operating system, a user interface, an application program or instruction, and the like, and the modem processor mainly processes wireless communication, such as a baseband processor. It can be understood that the modem processor described above may not be integrated into the processor 810.

The radio frequency unit 801 is configured to repeatedly transmit a first message Msg1 to perform random access.

The processor 810 is configured to determine transmitting parameters of a third message Msg3, where the transmitting parameters include a number of transmitting times and/or transmitting beams.

Optionally, the step where the processor 810 determines the number of transmitting times of the Msg3, includes at least one of the following: the number of transmitting times of the Msg3 is determined according to an unscrambling result of an uplink grant (UL Grant) included in a monitored second message Msg2; the number of transmitting times of the Msg3 is defaulted to be equal to a number of transmitting times of the Msg1; the number of transmitting times of the Msg3 is determined according to a value of a random access radio network temporary identifier (RA-RNTI), where the RA-RNTI is used to monitor the Msg2; and the number of transmitting times of the Msg3 is determined according to first downlink control information, where the first downlink control information includes DCI 0-0 scrambled by a TC-RNTI.

Optionally, the step where the processor 810 determines the number of transmitting times of the Msg3 according to the value of the RA-RNTI, includes: in a case that a plurality of RA-RNTIs are used to monitor the Msg2, the number of transmitting times of the Msg3 is determined according to a value of a target RA-RNTI, where the target RA-RNTI is the RA-RNTI successfully monitoring the Msg2 among the plurality of the RA-RNTIs, and the plurality of RA-RNTIs are in one-to-one correspondence with the first message Msg1 repeatedly transmitted.

Optionally, the step where the process 810 determines the transmitting beam of the Msg3, includes at least one of the following: according to a first reference beam, the transmitting beam of the Msg3 during initial transmission is determined, where the first reference beam is determined according to an unscrambling result of a UL Grant included in the monitored Msg2, the value of the RA-RNTI, or a protocol default rule; and according to a second reference beam, the transmitting beam of the Msg3 during retransmission is determined, where the second reference beam is determined according to first downlink control information or a protocol default rule, and the first downlink control information includes DCI 0-0 scrambled by a TC-RNTI.

Optionally, the first reference beam includes at least one of the following: a transmitting beam of the Msg1; a receiving beam of the Msg2; and a receiving beam of a synchronization signal and PBCH block (SSB), where the SSB is associated with the Msg1.

Optionally, the second reference beam includes at least one of the following: a transmitting beam of the Msg1; a receiving beam of the Msg2; a receiving beam of a synchronization signal and PBCH block (SSB), where the SSB is associated with the Msg1; and the transmitting beam of the Msg3 during initial transmission.

Optionally, the unscrambling result of the UL Grant included in the Msg2 is obtained when the terminal unscrambles the UL Grant in the Msg2 according to a first unscrambling manner, where the first unscrambling manner includes at least one of the following: a UL Grant unscrambling manner indicated by first system information; a default UL Grant unscrambling manner; and a UL Grant unscrambling manner indicated by a first field, where the first field includes any one of a field in a sub protocol data unit (sub PDU) included in the Msg2, a field in the UL grant included in the Msg2, and a field in second downlink control information, and the second downlink control information is DCI 1-0 scrambled by the RA-RNTI.

Optionally, the field in the UL grant includes at least one of a channel state information request (CSI request) field, a modulation and coding scheme (MCS) field, and a transmit power control (TPC) field.

Optionally, UL Grant formats corresponding to the UL Grant unscrambling manner include any one of the following: a first UL grant format, where a UL grant corresponding to the first UL grant format indicates the number of transmitting times of the Msg3, but is not able to indicate the transmitting beam of the Msg3; a second UL grant format, where a UL grant corresponding to the second UL grant format is not able to indicate the number of transmitting times and the transmitting beam of the Msg3; and a third UL grant format, where a UL grant corresponding to the third UL grant format indicates the number of transmitting times and the transmitting beam of the Msg3.

Optionally, in a case that the UL Grant format corresponding to the UL Grant unscrambling manner is the first UL grant format or the second UL grant format, the step where the processor 810 determines, according to the first reference beam, the transmitting beam of the Msg3 during initial transmission includes any one of the following: the transmitting beam of the Msg3 is determined according to the receiving beam of the Msg2; and the first reference beam is determined according to the value of the RA-RNTI, and the transmitting beam of the Msg3 is determined according to the first reference beam, where the first reference beam includes the receiving beam of the Msg2 or the receiving beam of the SSB, where the Msg3 is transmitted one time or the Msg3 is repeatedly transmitted multiple times, but uses a single beam.

Optionally, in a case that the UL Grant format corresponding to the UL Grant unscrambling manner is the first UL grant format or the second UL grant format, the step where the processor 810 determines the transmitting beam of the Msg3 further includes: The processor 810 determines, according to a transmitting beam pattern, a transmitting beam used when the Msg3 is repeatedly transmitted, where the transmitting beam pattern includes L transmitting beams, and L is an integer greater than 1.

Optionally, the order of the transmitting beams included in the transmitting beam pattern is the same as the order of the transmitting beams for repeatedly transmitting the Msg1.

Optionally, the step where the processor 810 determines, according to the transmitting beam pattern, the transmitting beam used when the Msg3 is repeatedly transmitted includes any one of the following: in a case that L is greater than M, the processor 810 starts to determine M transmitting beams when the Msg3 is repeatedly transmitted from a first beam in the transmitting beam pattern, and the first beam and the position of the first beam in the transmitting beam pattern are determined according to the receiving beam of the Msg2 or the value of the RA-RNTI; in a case that L is equal to M, the processor 810 starts to determine transmitting beams of M Msg3s from a first transmitting beam in the transmitting beam pattern, where the first transmitting beam is a starting transmitting beam when the M Msg3s are repeatedly transmitted; and in a case that L is less than M, M transmitting beams when the Msg3 is repeatedly transmitted are determined from the transmitting beam pattern according to a cyclic manner, where M is the number of transmitting times of the Msg3, and L and M are both integers greater than or equal to 1.

Optionally, the starting transmitting beam when the Msg3 is repeatedly transmitted is determined according to the receiving beam of the Msg2 or the value of the RA-RNTI.

Optionally, the order of the transmitting beams when the Msg3 is repeatedly transmitted is determined in accordance with the order of beams in the transmitting beam pattern.

Optionally, the radio frequency unit 801 is configured to receive second system information transmitted by the network-side device in a case that random access is performed by repeatedly transmitting the first message Msg1, where the second system information includes first configuration information and second configuration information, the first configuration information is used for repeatedly transmitting the Msg1, and the second configuration information is used for transmitting the Msg3.

Optionally, the first configuration information includes at least one of the following: whether a transmitting beam corresponding to the Msg1 is a single beam or multiple beams; whether the Msg1 is associated with a single SSB or associated with a plurality of SSBs; whether a first cell supports repeated transmission of the Msg3, where the first cell is a serving cell of the terminal; and the unscrambling manner of the UL Grant.

Optionally, the second configuration information includes at least one of the following: whether a transmitting beam corresponding to the Msg3 is a single beam or multiple beams; and a first transmitting beam pattern corresponding to the Msg3.

Optionally, the processor 810 is further configured to determine, according to the first configuration information and/or the second configuration information, at least one of the following: whether a first cell supports repeated transmission of the Msg1; whether a first cell supports repeated transmission of the Msg3; and relevant parameters used when the Msg3 is repeatedly transmitted, where the first cell is a serving cell of the terminal.

Optionally, the relevant parameters used when the Msg3 is repeatedly transmitted include at least one of the following: a first set, where the first set includes at least one Msg1 time-frequency resource set; a second set, where the second set includes at least one Msg1 preamble; a third set, where the third set includes at least one number of repeated transmitting times of the Msg1; a fourth set, where the fourth set includes at least one number of repeated transmitting times of the Msg3; and a transmit power ramping value.

In this embodiment, when the terminal repeatedly transmits the Msg1 to perform random access, the unscrambling manner for unscrambling the UL grant in the Msg2 and the transmitting parameter of the Msg3 may be determined by protocol conventions or dynamic indication or the like, whereby not only can it enhance the coverage performance of uplink channels such as the Msg1 and the Msg3, and but also ensure that the UL grant and DCI 0-0 overhead remain unchanged, thereby ensuring that the transmitting parameter of the Msg3 is not ambiguous on both sides of the base station and the terminal, which in turn ensures the reliability of the random access process.

An embodiment of this application further provides a network-side device, including a processor and a communication interface, where the communication interface is coupled to the processor, and the processor is configured to run programs or instructions to implement steps of the method in the embodiment 500. The network-side device embodiment corresponds to the above network-side device method embodiment, each implementation process and implementation of the above method embodiment can both be applied in the network-side device embodiment, and the same technical effect can be achieved.

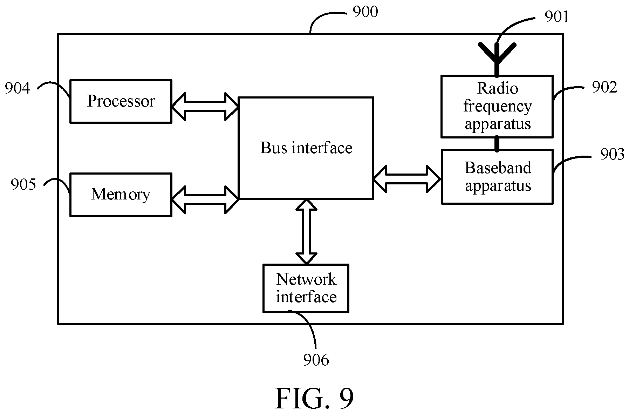

Specifically, an embodiment of this application further provides a network-side device. As shown in FIG. 9, the network-side device 900 includes: an antenna 901, a radio frequency apparatus 902, and a baseband apparatus 903. The antenna 901 is connected to the radio frequency apparatus 902. In the uplink direction, the radio frequency apparatus 902 receives information via the antenna 901 and transmits the received information to the baseband apparatus 903 for processing. In the downlink direction, the baseband apparatus 903 processes information to be transmitted and transmits it to the radio frequency apparatus 902, and the radio frequency apparatus 902 processes the received information and then transmits it out by the antenna 901.

The above frequency band processing apparatus may be located in the baseband apparatus 903, the method executed by the network-side device in the above embodiment may be realized in the baseband apparatus 903, and the baseband apparatus 903 includes a processor 904 and a memory 905.

The baseband apparatus 903 may, for example, include at least one baseband board, which is provided with a plurality of chips, as shown in FIG. 9, one of the chips is, for example, a processor 904, and is connected to the memory 905 to call programs in the memory 905 to execute operations of the network-side device as shown in the above method embodiment.

The baseband apparatus 903 may further include a network interface 906, which is configured to interact information with the radio frequency apparatus 902. The interface is, for example, a common public radio interface (common public radio interface, CPRI for short).

Specifically, the network-side device of the embodiment of this application further includes: instructions or programs stored on the memory 905 and executable on the processor 904, where the processor 904 calls the instructions or programs in the memory 905 to execute the method executed by various modules shown in FIG. 7, and the same technical effect can be achieved, details of which are omitted here for brevity.

An embodiment of this application further provides a readable storage medium, where programs or instructions are stored on the readable storage medium, the programs or instructions, when executed by a processor, implement the various processes of the above random access method embodiments 200-500, and the same technical effect can be achieved, details of which are omitted here for brevity.

The processor is a processor in the terminal in the above embodiment. The readable storage medium includes a computer-readable storage medium, such as a computer read-only memory (Read-Only Memory, ROM).

An embodiment of this application further provides a chip, where the chip includes a processor and a communication interface, the communication interface is coupled to the processor, the processor is configured to run programs or instructions of a network-side device to implement the various processes of the above random access methods 200-500, and the same technical effect can be achieved, details of which are omitted here for brevity.

It is to be understood that the chip referred to in the embodiment of this application may also be referred to as a system-level chip, a system chip, a chip system or a system-on-chip, etc.

An embodiment of this application further provides a computer program product, where the computer program product includes a processor, a memory, and programs or instructions stored on the memory and executable on the processor, and the programs or instructions, when executed by the processor, implement the various processes of the above method embodiments 200-500, and the same technical effect can be achieved, details of which are omitted here for brevity.

It is to be noted that the terms "include", "contain", or any other variants thereof in this specification are intended to cover a non-exclusive inclusion, such that a process, method, object, or apparatus including a set of elements includes not only those elements, but also other elements that are not expressly listed or elements that are inherent to such processes, methods, objects, or apparatuses. Without more limitations, elements defined by the sentence "including one" does not exclude that there are still other same elements in the process, method, object, or apparatus including the element. Furthermore, it is to be noted that the scope of the method and apparatus in the embodiments of this application is not limited to executing the functions in the order shown or discussed, but may also include executing the functions in a substantially same manner or in the reverse order according to the functions involved, for example, the described method may be executed in an order different from the order described, and various steps may also be added, omitted, or combined. In addition, features described with reference to some examples may also be combined in other examples.

According to the descriptions in the above implementations, a person skilled in the art may clearly learn that the method according to the above embodiment may be implemented by relying on software and an essential common hardware platform or, of course, by using hardware, however, in many cases the former is a better implementation. On the basis of such an understanding, the technical solutions of this application essentially, or the part contributing to the prior art, may be presented in the form of a computer software product. The computer software product is stored in a storage medium (for example, ROM/RAM, a magnetic disk, or an optical disc) including several instructions to enable a terminal (which may be a mobile phone, a computer, a server, an air conditioner, a network device, or the like) to execute the methods described in the various embodiments of this application.

The embodiments of this application have been described above with reference to the accompanying drawings. This application is not limited to the specific embodiments described above, and the specific embodiments described above are merely exemplary and not restrictive. Those of ordinary skill in the art may make various variations under the teaching of this application without departing from the spirit of this application and the protection scope of the claims, and such variations all fall within the protection scope of this application.

## Claims

1. A random access method, comprising:
performing, by a terminal, random access by repeatedly transmitting a first message Msg1.

2. The method according to claim 1, wherein the method further comprises:
determining, by the terminal, transmitting parameters of a third message Msg3,
wherein the transmitting parameters comprise a number of transmitting times and/or transmitting beams.

3. The method according to claim 2, wherein the step of the determining, by the terminal, a number of transmitting times of a Msg3, comprises at least one of the following:
determining, by the terminal, the number of transmitting times of the Msg3 according to an unscrambling result of an uplink grant (UL Grant) comprised in a monitored second message Msg2;
defaulting, by the terminal, the number of transmitting times of the Msg3 to be equal to a number of transmitting times of the Msg1;
determining, by the terminal, the number of transmitting times of the Msg3 according to a value of a random access radio network temporary identifier (RA-RNTI), the RA-RNTI being used to monitor the Msg2; and
determining, by the terminal, the number of transmitting times of the Msg3 according to first downlink control information, the first downlink control information comprising DCI 0-0 scrambled by a temporary cell RNTI (TC-RNTI).

4. The method according to claim 3, wherein the step of the determining, by the terminal, the number of transmitting times of the Msg3 according to a value of an RA-RNTI, comprises:
in a case that the terminal uses a plurality of RA-RNTIs to monitor the Msg2, determining, by the terminal, the number of transmitting times of the Msg3 according to a value of a target RA-RNTI,
wherein the target RA-RNTI is an RA-RNTI successfully monitoring the Msg2 among the plurality of the RA-RNTIs, and the plurality of RA-RNTIs are in one-to-one correspondence with the first message Msg1 repeatedly transmitted.

5. The method according to claim 2, wherein the step of the determining, by the terminal, the transmitting beam of the Msg3 comprises at least one of the following:
determining, by the terminal according to a first reference beam, a transmitting beam of the Msg3 during initial transmission, the first reference beam being determined by the terminal according to an unscrambling result of an UL Grant comprised in a monitored Msg2, a value of the RA-RNTI, or a protocol default rule; and
determining, by the terminal according to a second reference beam, the transmitting beam of the Msg3 during retransmission, the second reference beam being determined by the terminal according to first downlink control information or a protocol default rule, and the first downlink control information comprising DCI 0-0 scrambled by a TC-RNTI.

6. The method according to claim 5, wherein the first reference beam comprises at least one of the following:
a transmitting beam of the Msg1;
a receiving beam of the Msg2; and
a receiving beam of a synchronization signal and PBCH block (SSB), the SSB being associated with the Msg1.

7. The method according to claim 5, wherein the second reference beam comprises at least one of the following:
a transmitting beam of the Msg1;
a receiving beam of the Msg2;
a receiving beam of a synchronization signal and PBCH block (SSB), the SSB being associated with the Msg1; and
the transmitting beam of the Msg3 during initial transmission.

8. The method according to claim 3 or 5, wherein an unscrambling result of the UL Grant comprised in the Msg2 is obtained when the terminal unscrambles the UL Grant in the Msg2 according to a first unscrambling manner, and the first unscrambling manner comprises at least one of the following:
a UL Grant unscrambling manner indicated by first system information;
a default UL Grant unscrambling manner; and
a UL Grant unscrambling manner indicated by a first field, the first field comprising any one of: a field in a sub protocol data unit (sub PDU) comprised in the Msg2, a field in the UL grant comprised in the Msg2, and a field in second downlink control information, and the second downlink control information being DCI 1-0 scrambled by the RA-RNTI.

9. The method according to claim 8, wherein the field in the UL grant comprises at least one of: a channel state information request (CSI request) field, a modulation and coding scheme (MCS) field, and a transmit power control (TPC) field.

10. The method according to claim 8, wherein UL Grant formats corresponding to the UL Grant unscrambling manner comprise any one of the following:
a first UL grant format, a UL grant corresponding to the first UL grant format indicating the number of transmitting times of the Msg3, but being not able to indicate the transmitting beam of the Msg3;
a second UL grant format, a UL grant corresponding to the second UL grant format being not able to indicate the number of transmitting times and the transmitting beam of the Msg3; and
a third UL grant format, a UL grant corresponding to the third UL grant format indicating the number of transmitting times and the transmitting beam of the Msg3.

11. The method according to claim 10, wherein in a case that the UL Grant format corresponding to the UL Grant unscrambling manner is the first UL grant format or the second UL grant format, the step of the determining, by the terminal according to a first reference beam, the transmitting beam of the Msg3 during initial transmission comprises any one of the following:
determining, by the terminal, the transmitting beam of the Msg3 according to the receiving beam of the Msg2; and
determining, by the terminal, the first reference beam according to the value of the RA-RNTI, and determining, by the terminal the transmitting beam of the Msg3 according to the first reference beam, the first reference beam comprising the receiving beam of the Msg2 or the receiving beam of the SSB,
wherein the Msg3 is transmitted one time, or the Msg3 is repeatedly transmitted multiple times by using a single beam.

12. The method according to claim 10, wherein in a case that the UL Grant format corresponding to the UL Grant unscrambling manner is the first UL grant format or the second UL grant format, the step of the determining, by the terminal, the transmitting beam of the Msg3, further comprises:
determining, by the terminal according to a transmitting beam pattern, transmitting beams used when the Msg3 is repeatedly transmitted,
wherein the transmitting beam pattern comprises L transmitting beams, and L is an integer greater than 1.

13. The method according to claim 12, wherein an order of transmitting beams comprised in the transmitting beam pattern is the same as an order of transmitting beams for repeatedly transmitting the Msg 1.

14. The method according to claim 12, wherein the step of the determining, by the terminal according to a transmitting beam pattern, transmitting beams used when the Msg3 is repeatedly transmitted comprises any one of the following:
in a case that L is greater than M, the terminal starting to determine, from a first beam in the transmitting beam pattern, M transmitting beams when the Msg3 is repeatedly transmitted, the first beam and the position of the first beam in the transmitting beam pattern being determined according to the receiving beam of the Msg2 or the value of the RA-RNTI;
in a case that L is equal to M, the terminal starting to determine, from a first transmitting beam in the transmitting beam pattern, transmitting beams of M Msg3s, wherein the first transmitting beam is a starting transmitting beam when the M Msg3s are repeatedly transmitted; and
in a case that L is less than M, determining, from the transmitting beam pattern, M transmitting beams when the Msg3 is repeatedly transmitted according to a cyclic manner,
wherein M is the number of transmitting times of the Msg3, and L and M are both integers greater than or equal to 1.

15. The method according to claim 14, wherein the starting transmitting beam when the Msg3 is repeatedly transmitted is determined according to the receiving beam of the Msg2 or the value of the RA-RNTI.

16. The method according to claim 14, wherein an order of the transmitting beams when the Msg3 is repeatedly transmitted is determined in accordance with the order of beams in the transmitting beam pattern.

17. The method according to any one of claims 1 to 16, wherein in a case that random access is performed by repeatedly transmitting the first message Msg1, before the step of the determining, by the terminal, transmitting parameters of the third message Msg3, the method further comprises:
receiving, by the terminal, second system information transmitted by a network-side device, the second system information comprising first configuration information and second configuration information, the first configuration information being used for repeatedly transmitting the Msg1, and the second configuration information being used for transmitting the Msg3.

18. The method according to claim 17, wherein the first configuration information comprises at least one of the following:
whether a transmitting beam corresponding to the Msg1 is a single beam or multiple beams;
whether the Msg1 is associated with a single SSB or associated with a plurality of SSBs;
whether a first cell supports repeated transmission of the Msg3, wherein the first cell is a serving cell of the terminal; and
the unscrambling manner of the UL Grant.

19. The method according to claim 17, wherein the second configuration information comprises at least one of the following:
whether a transmitting beam corresponding to the Msg3 is a single beam or multiple beams; and
a first transmitting beam pattern corresponding to the Msg3.

20. The method according to claim 17, wherein after the step of the receiving, by the terminal, second system information transmitted by a network-side device, the method further comprises:
determining, by the terminal according to the first configuration information and/or the second configuration information, at least one of the following
whether a first cell supports repeated transmission of the Msg1;
whether a first cell supports repeated transmission of the Msg3; and
relevant parameters used when the Msg3 is repeatedly transmitted,
wherein the first cell is a serving cell of the terminal.

21. The method according to claim 20, wherein the relevant parameters used when the Msg3 is repeatedly transmitted comprise at least one of the following:
a first set, the first set comprising at least one Msg1 time-frequency resource set;
a second set, the second set comprising at least one Msg1 preamble;
a third set, the third set comprising at least a number of repeated transmitting times of the Msg1;
a fourth set, the fourth set comprising at least a number of repeated transmitting times of the Msg3; and
a transmit power ramping value.

22. A random access method, comprising:
receiving, by a network-side device, a first message Msg1,
wherein the Msg1 is repeatedly transmitted by a terminal.

23. The method according to claim 22, wherein after the step of the receiving, by a network-side device, a first message Msg1, the method further comprises:
transmitting, by the network-side device, a second message Msg2 to the terminal,
wherein the Msg2 is related to the determination of transmitting parameters of a third message Msg3, and the transmitting parameters comprise a number of transmitting times and/or transmitting beams.

24. The method according to claim 23, wherein the Msg2 comprises a first field for indicating an unscrambling manner of a UL Grant, the first field comprising a field in a sub protocol data unit (sub PDU) comprised in the Msg2, and a field in a UL grant comprised in the Msg2.

25. The method according to claim 23, wherein the field in the UL grant comprises at least one of: a channel state information request (CSI request) field, a modulation and coding scheme (MCS) field, and a transmit power control (TPC) field.

26. The method according to claim 23, wherein after the step of transmitting the second message Msg2 to the terminal, the method further comprises:
in a case that the network-side device receives the Msg3 initially transmitted by the terminal, transmitting, by the network-side device, first downlink control information to the terminal,
wherein the first downlink control information comprises DCI 0-0 scrambled by a TC-RNTI, and the first downlink control information is related to transmitting parameters of the Msg3 during retransmission.

27. The method according to claim 23, wherein before the step of the receiving, by the network-side device, the first message Msg1 repeatedly transmitted by the terminal, the method further comprises:
transmitting, by the network-side device, second system information to the terminal,
wherein the second system information comprises first configuration information and second configuration information, the first configuration information is used for repeatedly transmitting the Msg1, and the second configuration information is used for transmitting the Msg3.

28. The method according to claim 27, wherein the first configuration information comprises at least one of the following:
whether a transmitting beam corresponding to the Msg1 is a single beam or multiple beams;
whether the Msg1 is associated with a single SSB or associated with a plurality of SSBs;
whether a first cell supports repeated transmission of the Msg3, wherein the first cell is a serving cell of the terminal; and
the unscrambling manner of the UL Grant.

29. The method according to claim 27, wherein the second configuration information comprises at least one of the following:
whether a transmitting beam corresponding to the Msg3 is a single beam or multiple beams; and
a first transmitting beam pattern corresponding to the Msg3.

30. A random access apparatus, applied to a terminal, the apparatus comprising:
a first transmission module, configured to perform random access by repeatedly transmitting a first message Msg1.

31. The apparatus according to claim 30, wherein the apparatus further comprises:
a determining module, configured to determine transmitting parameters of a third message Msg3,
wherein the transmitting parameters comprise a number of transmitting times and/or transmitting beams.

32. The apparatus according to claim 31, wherein the step of the determining, by the determining module, a number of transmitting times of a Msg3, comprises at least one of the following:
determining the number of transmitting times of the Msg3 according to an unscrambling result of an uplink grant (UL Grant) comprised in a monitored second message Msg2;
defaulting the number of transmitting times of the Msg3 to be equal to a number of transmitting times of the Msg1;
determining the number of transmitting times of the Msg3 according to a value of a random access radio network temporary identifier (RA-RNTI), the RA-RNTI being used to monitor the Msg2; and
determining the number of transmitting times of the Msg3 according to first downlink control information, the first downlink control information comprising DCI 0-0 scrambled by a TC-RNTI.

33. The apparatus according to claim 31, wherein the step of the determining, by the determining module, the number of transmitting times of the Msg3 according to a value of an RA-RNTI, comprises:
in a case that a plurality of RA-RNTIs are used to monitor the Msg2, determining the number of transmitting times of the Msg3 according to a value of a target RA-RNTI,
wherein the target RA-RNTI is an RA-RNTI successfully monitoring the Msg2 among the plurality of the RA-RNTIs, and the plurality of RA-RNTIs are in one-to-one correspondence with the first message Msg1 repeatedly transmitted.

34. The apparatus according to claim 31, wherein the step of the determining, by the determining module, the transmitting beam of the Msg3, comprises at least one of the following:
according to a first reference beam, determining the transmitting beam of the Msg3 during initial transmission, the first reference beam being determined according to an unscrambling result of a UL Grant comprised in the monitored Msg2, the value of the RA-RNTI, or a protocol default rule; and
according to a second reference beam, determining the transmitting beam of the Msg3 during retransmission, the second reference beam being determined according to first downlink control information or a protocol default rule, and the first downlink control information comprising DCI 0-0 scrambled by a TC-RNTI.

35. The apparatus according to claim 33 or 34, wherein an unscrambling result of the UL Grant comprised in the Msg2 is obtained when the terminal unscrambles the UL Grant in the Msg2 according to a first unscrambling manner, and the first unscrambling manner comprises at least one of the following:
a UL Grant unscrambling manner indicated by first system information;
a default UL Grant unscrambling manner; and
a UL Grant unscrambling manner indicated by a first field, the first field comprising any one of: a field in a sub protocol data unit (sub PDU) comprised in the Msg2, a field in the UL grant comprised in the Msg2, and a field in second downlink control information, and the second downlink control information being DCI 1-0 scrambled by the RA-RNTI.

36. A random access apparatus, applicable to a network-side device, the apparatus comprising:
a second transmission module, configured to receive a first message Msg1,
wherein the Msg1 is repeatedly transmitted by a terminal.

37. The apparatus according to claim 36, wherein the second transmission module is further configured to transmit a second message Msg2 to the terminal,
wherein the Msg2 is related to the determination of transmitting parameters of a third message Msg3, and the transmitting parameters comprise a number of transmitting times and/or transmitting beams.

38. A terminal, comprising a processor, a memory, and programs or instructions stored on the memory and executable on the processor, the programs or instructions, when executed by the processor, implementing steps of the random access method according to any one of claims 1 to 21.

39. A network-side device, comprising: a processor, a memory, and programs or instructions stored on the memory and executable on the processor, the programs or instructions, when executed by the processor, implementing steps of the random access method according to any one of claims 22 to 29.

40. A readable storage medium, programs or instructions being stored on the readable storage medium, and the programs or instructions, when executed by a processor, implementing steps of the random access method according to any one of claims 1 to 21, or implementing steps of the random access method according to any one of claims 22 to 29.
